# EUROPÄISCHE PATENTSCHRIFT

(11) **EP 1 018 041 B1**
(45) Veröffentlichungstag und Bekanntmachung des Hinweises auf die Patenterteilung: **18.06.2003**
(21) Anmeldenummer: 97952874.2
(22) Anmeldetag: 04.12.1997
(51) Int. Cl.: G02B 5/32, G03B 21/60

(54) **BILDSCHIRM FÜR LASERAUFPROJEKTION**
SCREEN FOR FRONT LASER PROJECTION
ECRAN POUR PROJECTION LASER FRONTALE

(30) Priorität: 07.01.1997 DE 19700162
(43) Veröffentlichungstag der Anmeldung: 12.07.2000
(73) Patentinhaber: EADS Deutschland GmbH, 85521 Ottobrunn (DE); HSM Holographic Systems München GmbH, 85652 Ottersberg (DE)
(72) Erfinder: GNÄDIG, Klaus, deceased (DE); DAUSMANN, Günther, D-85435 Erding (DE); HALLDORSSON, Thorstein, D-81925 München (DE)
(86) Internationale Anmeldenummer: EP9706774
(87) Internationale Veröffentlichungsnummer: WO98030924

(56) Entgegenhaltungen:
- EP-A- 0 465 429
- DE-A- 3 419 098
- FR-A- 2 640 772
- FR-A- 2 699 289
- US-A- 4 960 311
- US-A- 4 984 856
- US-A- 5 372 900

## Beschreibung

Die Erfindung betrifft ein Verfahren zur Herstellung und Anwendung eines Bildschirm für Laseraufprojektion in einer oder mehreren Laserwellenlängen, der selektiv die einfallende, spektral schmalbandige Laserstrahlung in einen vorherbestimmten Raumwinkel zurückstreut, aber gleichzeitig das störende, spektral breitbandige Umgebungslicht stark absorbiert.

Kurz nachdem leistungsstarke Laser im sichtbaren Bereich des Spektrums in den sechziger Jahren verfügbar waren, erfolgten auch die ersten Versuche der Laser-Projektion von Bildern auf Wände und Bildschirme. Siehe dazu z.B. C.E.Baker, "Laser Display Technology ", IEEE-Spectrum, Dec. 1968, p. 39 - 50. Auf der Weltausstellung 1970 in Osaka/Japan präsentierte die Firma Hitachi eine Laser-Farbfernsehproduktion auf einem Projektionsschirm mit Abmessungen von etwa 3 m x 4 m, wie z.B. in dem Artikel "Farbfernseh-Großprojektion mit Laser" in der Zeitschrift Funkschau, Heft 4, 1970 beschrieben.

Obwohl diese ersten Laserprojektionen von der Bildhelligkeit, Auflösung und Farbtreue bereits eine beachtliche Qualität erreichten, blieben der technische Aufwand und die Kosten sehr hoch, vor allem bedingt durch die verwendeten ineffizienten Argon- und Kryptonlaser mit einem Wirkungsgrad der elektrisch-optischen Wandlung unter 0.1%. Somit blieben Laserprojektionen auf einzelne Anwendungen, wie Lightshows, spezielle Großbilddarstellungen im militärischen Bereich oder bei der Flugsimulation in der Pilotenausbildung beschränkt.

In den letzten Jahren haben sich die technischen Voraussetzungen zur Realisierung von Laser-Displays erheblich verbessert, wie z.B. in dem Artikel von C. Deter, "Laser-Display-Technologie- wo stehen wir?" in der Zeitschrift "Physikalische Blätter", 52, (1996), Nr. 11, Seite 1129 dargestellt ist. Heute können wesentlich effizientere und kostengünstigere diodenangeregte Festkörperlaser oder Faserlaser bzw. in Zukunft auch Laserdioden mit einer elektrisch-optischen Effizienz von 10 - 30% für die Bildprojektion in den monochromatischen Laserfarben Rot, Grün. Blau (RGB) eingesetzt werden. Zum Bildaufbau durch Strahlabtastung ("Scannen") werden bald in der kostengünstigeren Siliziumtechnologie hergestellte Ablenkeinheiten zur Verfügung stehen.

Es ist zu erwarten, daß in den bereits eingeführten Projektionsverfahren, die nach dem Lichtventilprinzip analog der Diaprojektion arbeiten und modulierbare Flüssigkristall - bzw. Mikrospiegelmatrizen verwenden, künftig auch mehrfarbiges Laserlicht verwendet werden wird.

Ein Bild kann grundsätzlich auf zweierlei Weise am Bildschirm generiert werden, in Aufprojektion bzw. Rück- oder Durchprojektion. In dem ersten Fall wird das Bild auf die Fläche des Schirmes geworfen, auf der es auch betrachtet wird. Der Schirm sollte in diesem Fall möglichst stark das auffallende Licht zurückstreuen. In dem zweiten Fall wird das Bild auf die entgegensetzte Seite des Schirmes projiziert. Der Schirm sollte dann möglichst gut das Licht durchlassen, aber gleichzeitig über einen größeren Winkel vorwärtsstreuen. Die Erfindung betriftt ausschließlich das erste Verfahren der Aurprojektion und Wiedergabe des rückgestreuten Lichtes und der Auslegung und Herstelllung eines solchen Bildschirmes für die Laserprojektion.

Einer der prinzipiellen Vorteile der Bildprojektion mit Lasern ist die hohe Leuchtdichte, die mit Lasern gegenüber anderen Quellen auch auf großen Projektionsschirmen erzeugt werden kann. Die photometrische Leuchtdichte (cd/m²) im sichtbaren Teil des Spektrums entspricht radiometrisch der Strahldichte einer lichtemittierernden Oberfläche, d.h. der in den Raumwinkel von einer Flächeneinheit abgestrahlten Leistung (W/sr m²). Die Strahldichte herkömmlicher thermischer Strahlungsquellen, wie Glühlampen, Bogenlampen oder Gasentladungslampen hat eine physikalische Grenze, die alleine durch ihre Farbtemperatur, d.h. die farbäquivalente Temperatur des schwarzen Körpers gegeben ist. Eine Anhebung ihrer Strahldichte durch Erhöhung der Temperatur ist nur mit der gleichzeitigen Verschiebung der Farbe zu kürzeren Wellenlängen und der damit verbundenen Änderung der Farbvalenz (Blaustich) möglich. Da das Produkt aus Projektionswinkel und der Fläche der Bildaustrittsöffnung für jedes System fest sind, begrenzt es grundsätzlich den für die Projektion von thermischen Strahlern nutzbaren Lichtfluß.

Dieses Produkt, der Lichtleitwert des optischen Systems, ist bei Lasern sehr niedrig und ermöglicht eine sehr starke Bündelung ihrer Strahlung durch die Austrittsöffnung des Projektors. Durch die in Lasern verwendete spektral selektive Lichtverstärkung ist im Gegensatz zu den thermischen Strahlern bei entsprechend starker Anregung die Ausgangsleistung und damit auch die erzielbare Strahldichte in dem Nutzstrahl theoretisch unbegrenzt.

Da fast alle Farben des Farbdreiecks durch die Summation von schmalbandigen Laserlinien der RGB-Farben erreicht werden können, eignen sich Laser aufgrund der vorher erwähnten Vorteile besonders gut als Lichtquellen für Projektionssysteme. Dies gilt für die beiden bekannten Projektionsverfahren: sowohl für die einen, die das Bild durch punktweises Abtasten des Schirms ("Scannen") mit einem gebündelten und modulierten Strahl seriell generieren, als auch für die anderen, bei denen alle Bildpunkte in einer Bildmatrix gleichzeitig ausgeleuchtet und auf den Schirm projiziert werden.

Eine hohe Leuchtdichte des Bildes reicht jedoch nicht allein aus, um Bilder am Schirm mit hohen Kontrast und guter Farbqualität zu erzeugen, denn durch die Grundhelligkeit des Umgebungsraumes kann die Helligkeit des dunkelsten Punktes auf dem Schirm diesen Pegel nicht unterschreiten und die vom Auge wahrgenommene Farbe bildet sich aus der Summe der durch die Umgebung beeinflußten Grundfarbe des Schirmes und der momentanen Farbe der Projektion.

Der bei der Bildwiedergabe erreichbare Kontrast als Verhältnis aus maximaler und minimaler Leuchtdichte hängt damit von der Umgebungsbeleuchtung ab. In dunklen Räumen liefern gute Projektoren einen wahrgenommenen Kontrast von mehr als 200:1. Im praktischen Betrieb in hellen Räumen liegen die Werte etwa bei 40:1. Dies liegt an der Erhöhung des Schwarzwertes durch das Umgebungslicht und der Verzerrung der Graustufenabstufung des Auges bei höheren Leuchtdichten (Weber Fechnersches Gesetz). Die wahrgenommenen Farbvalenzen und Farbkontraste werden gleichzeitig durch das Umgebungslicht in ähnlicher Weise verändert.

Diese Probleme der Bildwiedergabe sind in der Fernsehtechnik lange bekannt, siehe z.B. "Fernsehtechnik", Hüttig-Verlag, Heidelberg, 1988 und werden durch Bildröhren mit Grauglas, die das Umgebungslicht im Glas abschwächen, bzw. mit einer sogenannten "black matrix", die im Inneren der Bildröhre auf optisch ungenutzten Teilen der Bildröhre aufgetragen wird und das Umgebungslicht absorbiert, entschärft.

Eine Erhöhung der Leuchtdichte des Schirmes in der Aurprojektion von Kathodenstrahlröhren, Flüssigkristall - oder Mikrospiegelmatrizen wird durch Verwendung eines besonderen optischen Belages auf dem Schirm, der das Licht in einen engen Winkel zurückstreut und/oder durch konkave Wölbung der Schirmoberfläche erzielt. Gleichzeitig wird der Kontrast verbessert, denn das seitlich auf den Schirm fallende Umgebungslicht wird nicht mehr dem Betrachter zugeleitet.

Einzelne Versuche sind auch bekannt, Projektionen mit breitbandigen Licht auf spezielle holografische Schirme vorzunehmen, siehe z.B. R.L.Shie, C.W. Chan, J.M. Lerner, "Surface relief holography for use in display screens", SPIE, Vol. 2407, p. 177-184, wobei die Lichtstreuung eines Oberflächenreliefhologrammes zur Bildwiedergabe genutzt wird und die Streucharakteristik durch eine besondere Auslegung des Hologramms eingestellt wird.

Trotz dieser Maßnahmen ist es jedoch bis jetzt nicht gelungen, für die Helligkeit, den Kontrast und die Farbwiedergabe einer Aufprojektion in hellen Räumen die annähernd gleiche Qualität wie bei der direkten Darstellung auf dem Bildschirm einer Kathodenstrahlröhre zu erreichen.

Dagegen steht das grundsätzliche Problem von Bildröhren: Ihr Volumen und ihr Gewicht. Große Bilder können deshalb nur auf aneinandergereihten Bildröhren aufgeteilt dargestellt werden, mit den bekannten Nachteilen störender Zwischenräume, ungleichmäßiger Helligkeit und unbalancierter Farben.

Der Erfindung liegt die Aufgabe zugrunde, vorzugsweise für eine Laserprojektion einen Projektionsschirm anzugeben, der das spektral schmalbandige Laserlicht in einer oder mehreren Farben mit hohem Wirkungsgrad in einen definierten Raumwinkel zurückstreut, aber das breitbandige Umgebungslicht weitgehend absorbiert und somit die Nachteile bekannter Schirme vermeidet.

Durch diesen erfindungsgemäßen Projektionsschirm wird erstens erreicht, daß große Bilder auch bei normaler Umgebungsbeleuchtung in hellen Räumen bzw. Tageslicht sich gegen die helle Umgebung abheben. Zweitens wird der ursprünglich im Gerät verfügbare Kontrast auch über den Schirm dem Betrachter wiedergegeben. Drittens wird eine Farbverfälschung oder - verschiebung durch unerwünschte Aufsummierung der Bildfarben mit denen der Umgebung minimiert.

Diese Aufgabe wird im Sinne der Erfindung durch die Gegenstande der Anspruche 1 und 2 gelöst. Objekt des holografischen Bildschirms ist vorzugsweise ein angepaßter weißer Schirm, der vorzugsweise mit allen verwendeten Laser - Projektionswellenlängen in das Hologramm einbelichtet wird. Bei der Aufnahme wird dafür gesorgt, daß der Schirm mit dem Objektstrahl so ausgeleuchtet wird, daß seine Rückstreucharakteristik die gleiche ist, wie sie später in der Anwendung erwünscht ist. Als Referenzstrahl bei der holografischen Aufnahme dient dabei ein aufgeweitetes Strahlenbündel, das von einem entsprechenden Ort ausgeht, wie der spätere Projektionsstrahl. Zur Wiedergabe kann bei einem Hologramm entweder flächenhafter Strahl wie bei der Aufnahme oder, ein punktuell tastender (scannender) Strahl verwendet werden.

Um die benötigte Winkel - und Wellenlängenselektivität aufzuweisen muß der holografische Bildschirm die Eigenschaften eines Volumenhologramms besitzen. Dies wird vorzugsweise durch die Aufnahme eines Reflexionshologramms in eine oder mehrere "dicke" Aufhahmeschichten (ca. 5 - 30 µm) erreicht. Volumengitterstrukturen entstehen bei der Aufnahme und Verarbeitung des Hologramms als Abbild des Schirms unabhängig voneinander bei den verschiedenen verwendeten Wellenlängen. Unter der sogenannten Bragg - Interferenz - Bedingung der Gitterstruktur, die jedesmal nur für die eine Wellenlänge und einen Beleuchtungswinkel erfüllt ist, wird Licht zurückreflektiert und es erscheint bei Betrachtung des Hologramms ein helles Reflexionsbild des Schirmes mit seiner ursprünglichen Streucharakteristik. Dies wiederholt sich für andere diskrete Wellenlängen mit deren zugeordneten Gitterstrukturen innerhalb der gleichen Schicht oder weiterer Schichten zu einem überlagerten Gesamtbild, was bei richtiger Farbabstimmung das Bild des ursprünglich weißen Schirms wiedergibt. Licht anderer Wellenlängen, sowie breitbandiges Licht wird wegen der fehlenden Übereinstimmung mit den Bragg - Bedingungen weitgehend ungeschwächt durchgelassen, wenn es nicht gerade aus der Richtung der Laserprojektion auffällt.

Wird das Hologramm auf eine schwarze Schicht in optischem Kontakt aufgezogen, erscheint der holografische Schirm unter flächenhafter Beleuchtung mit breitbandigem Umgebungslicht dunkel bzw. schwarz. Wird die Fläche des holografischen Schirms dagegen mit Laserstrahlen aus der richtigen Beleuchtungsrichtung, d.h. vom Ort des früheren festen Referenzstrahles abgetastet (gescannt), baut sich wieder das ursprüngliche Bild des Schirmes seriell auf. Werden die einzelnen Laserstrahlen noch mit Bilddaten moduliert, entsteht für den Betrachter in der holografischen Aufzeichnungsschicht das Bild, als würde es auf dem ursprünglichen Schirm erscheinen, nur mit den oben angegebenen erfindungsgemäßen Verbesserungen.

Auch bei Verwendung des Lichtventilprinzips zur Bildmodulation, d.h. der flächenhaften Beleuchtung und Projektion einer Bildmatrix, kann der so aufgenommene Schirm verwendet werden. Nur muß auch dafür gesorgt werden, daß bei der Aufnahme und Wiedergabe die gleichen Laserlinien verwendet werden und daß die Projektion vom gleichen Ort wie der Referenzstrahl ausgeht. Zur Sicherung einer guten Bildqualität muß dafür gesorgt werden, daß die Ausdehnung der Bildquelle vom Schirm aus gesehen näherungsweise einer Punktquelle entspricht, was bei den üblichen Projektionsabständen immer gegeben ist.

Die Herstellung eines erfindungsgemäßen holografischen Projektionsschirms ist oben beispielhaft beschrieben worden. Sie kann jedoch auf einer Vielzahl von verschiedenen Wegen und in unterschiedlichen Schritten erfolgen, die dem Fachmann bekannt und verständlich sind. Die Erfindung wird im folgenden anhand der in den Figuren teilweise schematisch dargestellten Ausführungsbeispiele näher beschrieben. Es zeigen:
- Fig. 1: die Direktaufnahme eines Reflexionshologramms eines Projektionsschirmes nach dem bekannten Verfahren von Yu. N. Denisyuk,
- Fig. 2: die Direktaufhahme eines Reflexionshologramms eines transparenten Schirmes analog dem Verfahren von Denisyuk, jedoch mit zusätzlichem Objektlicht,
- Fig. 3: die Belichtung eines Transmissionsmasterhologramms eines Schirmes,
- Fig. 4: die Belichtung eines Reflexionsmasterhologramms eines transparenten Schirmes,
- Fig. 5: die Entstehung des virtuellen Bildes des Schirmes bei Beleuchtung des Reflexionsmasterhologramms aus Fig. 4 vom Referenzpunkt,
- Fig. 6: die Rekonstruktion des reellen Schirmbildes vom Transmissionsmasterhologramm aus Fig. 3 mit dem konjugierten Referenzstrahl.
- Fig. 7: die Belichtung des holografischen Projektionsschirms durch reelle Rekonstruktion des Transmissionsmasterhologramms,
- Fig. 8: die Belichtung des holografischen Projektionsschirms durch reelle Rekonstruktion des Reflexionsmasterhologramms.
- Fig. 9: das Kontaktkopieren des holografischen Projektionsschirms als bevorzugtes Serienproduktionsverfahren und
- Fig. 10: den Querschnitt durch einen beispielhaften, fertigen holografischen Projektionsschirm mit drei holografischen Aufnahmeschichten für die Farben rot, grün und blau.

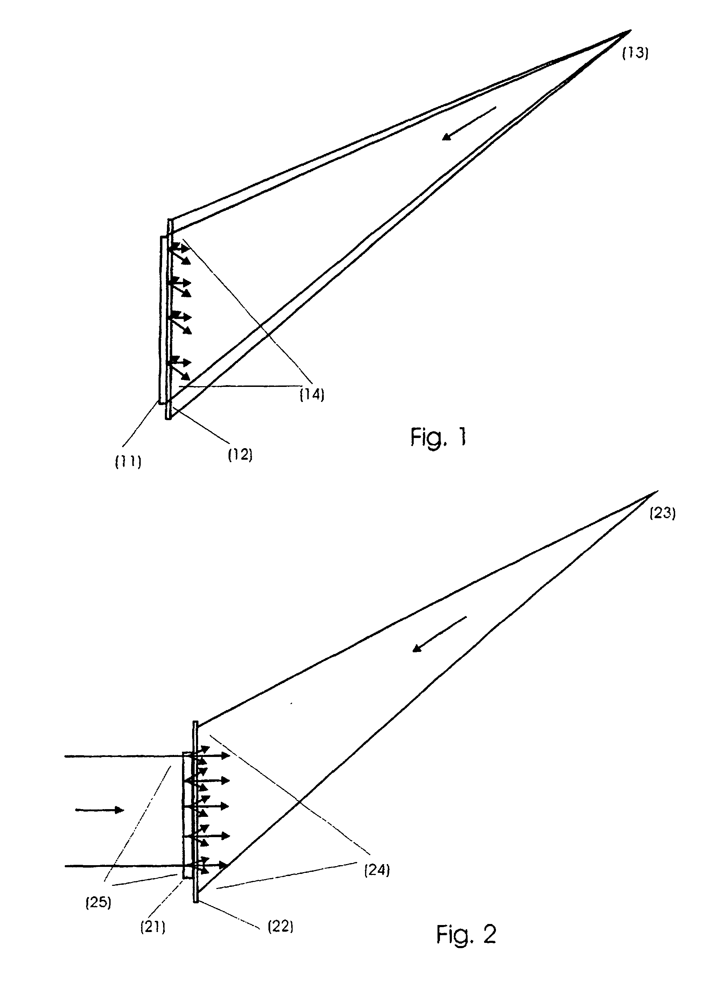

Fig. 1 zeigt die Aufnahme eines Reflexionshologramms eines Schirmes in einem Schritt nach dem Verfahren von Denisyuk. Der Bildschirm (11), z.B. eine stark rückstreuende Streuscheibe, wird direkt auf das holografische Aufnahmematerial (12) gelegt und mit Laserlicht mit einem Divergenzpunkt (13), der dem in der späteren Anwendung verwendeten Projektionsaufpunkt entspricht, beleuchtet. Der direkte Strahl bildet den Referenzstrahl, das durch das holografische Material durchgehende, von dem Schirm zurückgestreute Laserlicht (14) bildet die Quelle der Streustrahlung und damit das Objektlicht. Die Bildebene bei diesem Aufnahmeverfahren liegt praktisch in der Ebene des Hologrammmaterials. Bei der Projektion gilt das Gleiche.

Fig. 2 zeigt als Alternative zur Erfindung die Aufnahme eines holografischen Projektionsschirmes ebenfalls in einem Schritt. Der Bildschirm (21) ist hier eine transparente Streuscheibe, die von hinten beleuchtet wird und die wiederum direkt auf das holografische Aufnahmematerial (22) gelegt wird. Durch die Beleuchtung (25) von hinten lassen sich das Objekt - Referenz - Verhältnis bei der Aufnahme, die Helligkeitsverteilung über den Schirm und geometrischen Parameter des Streulichts (24), wie Streuwinkel und Streukeule unabhängig zur Optimierung des holografischen Projektionsschirms einstellen.

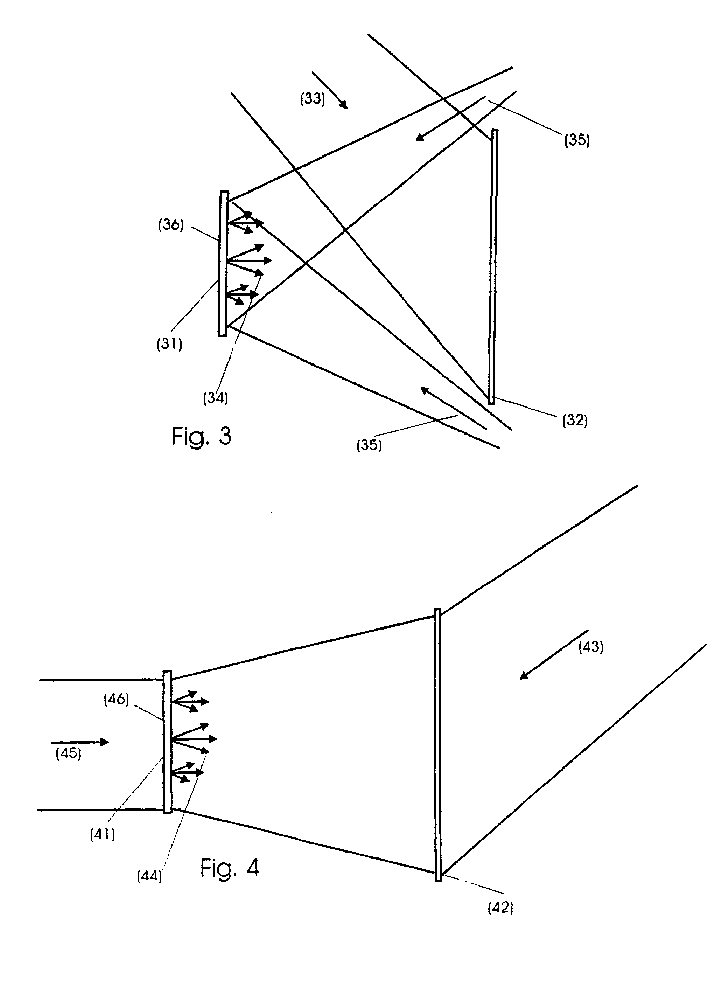

Fig. 3 zeigt die Aufnahme eines Transmissionsmasterhologramms eines Projektionsschirms für ein zweistufiges Herstellungsverfahren. Der Schirm (31) wird hier beispielhaft von zwei Objektstrahlen (35) beleuchtet. Das Referenzlicht (33) trifft von der gleichen Seite auf die Hologrammplatte wie das Objektlicht als Streulicht (34) des Schirmes. Der Master kann entweder als eigenständiges Bildschirmhologramm oder als Vorlage fiir weitere Hologrammaufnahmen verwendet werden.

Fig. 4 zeigt die Aufnahme eines Masterhologramms eines transparenten Schirms (41) in Reflexionstechnik für ein analoges zweistufiges Herstellungsverfahren. Hier trifft das Referenzlicht (43) von der entgegengesetzten Seite auf die Hologrammplatte (42) wie das Objektlicht (44). Die Beleuchtung des Schirms (45) geschieht hier vorzugsweise von hinten, wobei sich z.B. Vorteile der bezüglich Lichtstärke der Anordnung ergeben und korrigierende Maßnahmen bezüglich der Streulichtverteilung leicht möglich sind.

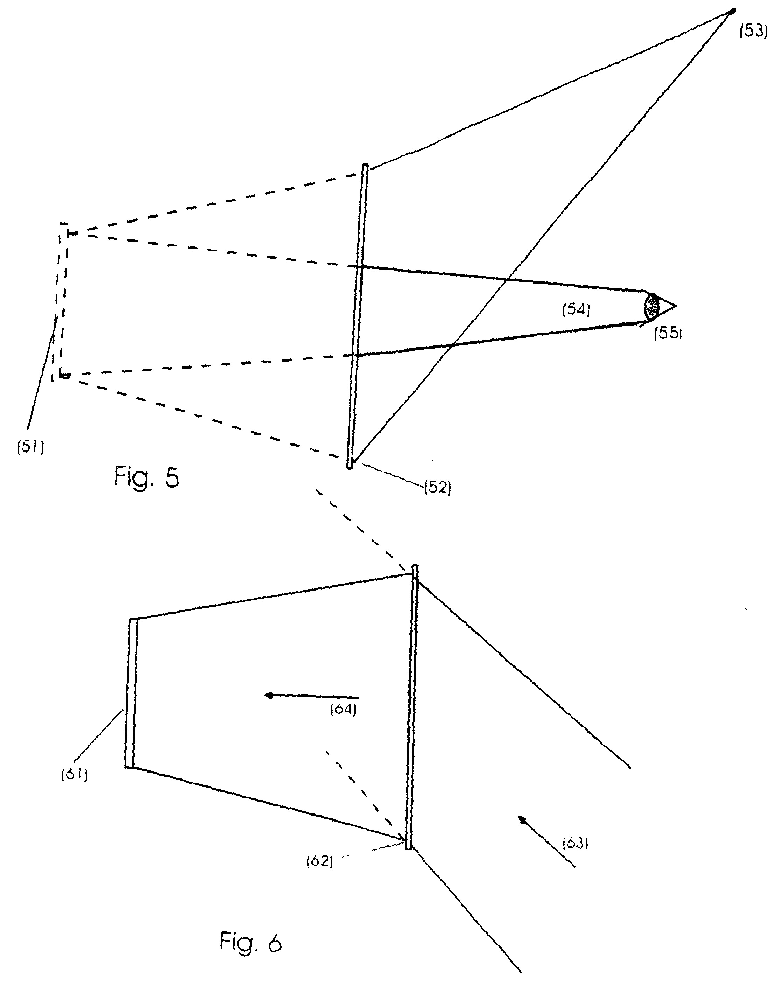

Fig. 5 zeigt die Entstehung eines virtuellen Bildes (51) des Bildschirms durch einen gescannten Laserstrahl (53) am Beispiel des Reflexionsmasters, das hinter der Hologrammebene (52) entsteht. Ein Teil des rekonstruierten Lichts (54) fällt in das Auge (55) des Betrachters. Solche Schirmhologramme können gegebenenfalls auch direkt Verwendung finden, z.B. für Anwendungen im Nahfeld als Computerschirm auf dem Schreibtisch mit erweitertem Bildabstand zur Erleichterung der Augenakkommodation.

Fig. 6 zeigt die Rekonstruktion eines reellen Bildes des Schirms (61) am Beispiel eines Transmissionsmasters (62). Soll das reelle Bild (61) in Dimension und Lage dem Originalschirm entsprechen, muß dazu der zum Referenzstrahl bei der Aufnahme konjugierte Strahl (63) verwendet werden, aus dem das Masterhologramm das Rekonstruktionslicht (64) erzeugt.

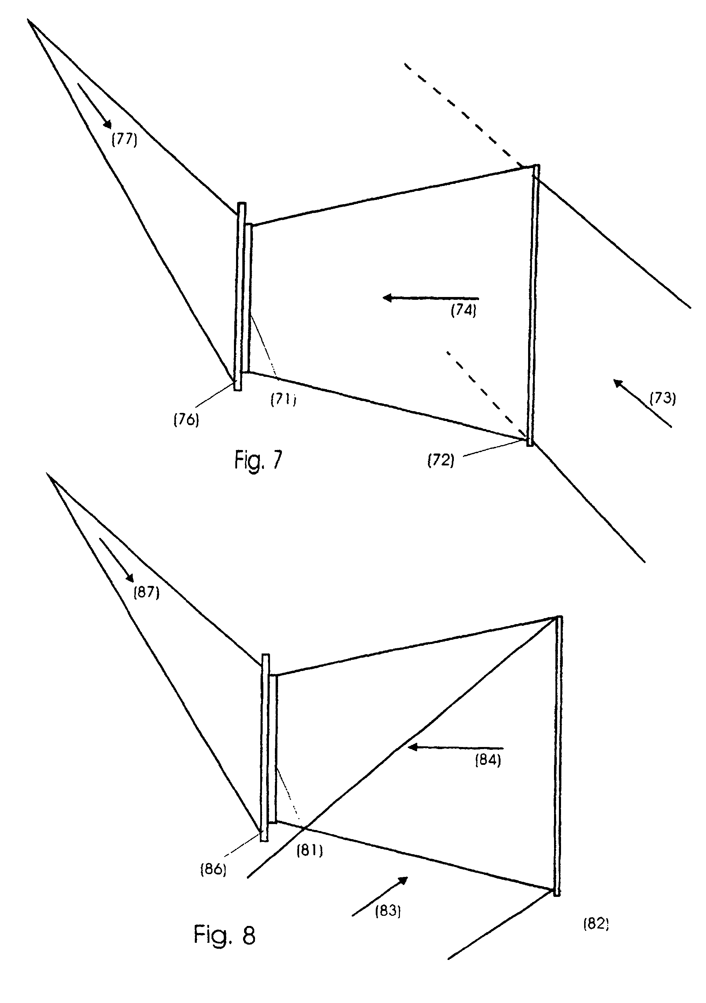

Fig. 7 zeigt das "Umkopieren" des Transmissionsmasters in einen holografischen Projektionsschirm als Bildebenenhologramm des Originalschirms. Hierzu wird ein reelles Bild des Schirms (71) durch den zur Referenz konjugierten Rekonstruktionsstrahl (73) vom Transmissionsmasterhologramm (72) erzeugt und am Ort des reellen Bildes das holografische Aufnahmematerial (76) plaziert und zusätzlich mit einem Referenzstrahl (77) beleuchtet, der in seiner Geometrie der späteren Projektionsgeometrie entsprechen muß, wie bereits oben ausgeführt wurde.

In Fig. 8 ist der analoge Vorgang des Umkopierens bei Verwendung eines Reflexionsmasters dargestellt. Hierzu wird wiederum ein reelles Bild des Schirms (81) durch den zum Referenzstrahl der Aufnahme konjugierten Rekonstruktionsstrahl (83) erzeugt und am Ort des Bildes das holografische Aufnahmematerial (86) plaziert und zusätzlich zu diesem Objektlicht mit einem Referenzstrahl (87) beaufschlagt, der wiederum in seiner Geometrie der späteren Reflexionsgeometrie entsprechen muß.

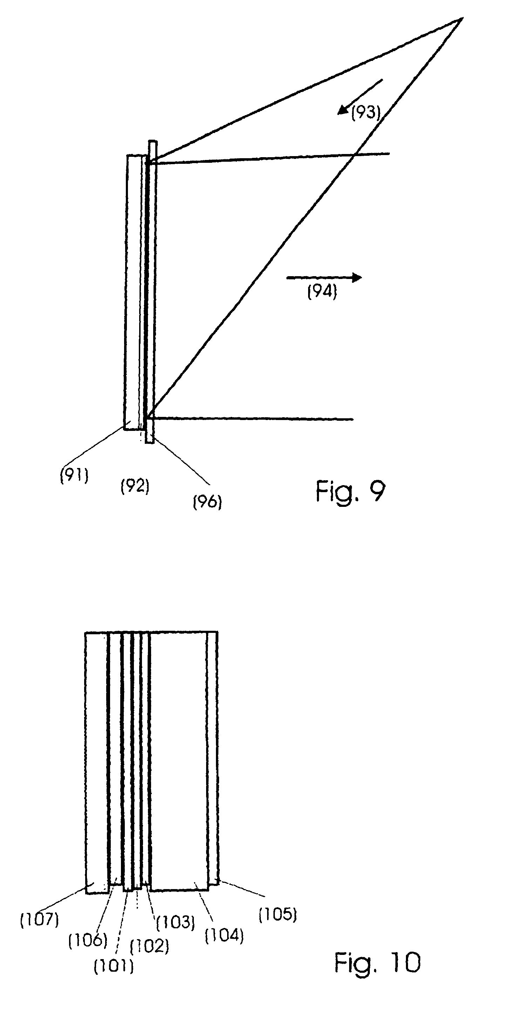

Eine bevorzugte, kostengünstige Methode zur Serienproduktion von holografischen Projektionsschirmen zeigt Fig. 9. Bei diesem Kontaktkopierverfahren wird ein sogenannter Kopiermaster (91) in Form eines fertig belichteten Hologramm - Schirms verwendet und unbelichtetes holografisches Aufnahmematerial (96) in unmittelbaren Kontakt zur holografischen Schicht (92) des Kopiermasters gebracht. Durch Laserbeleuchtung (93) mit der ungefähren Referenzgeometrie des Masters wird nun die Gitterstruktur in das Kopiermaterial übertragen und dadurch ein neuer holografischer Schirm erzeugt.

In Fig. 10 ist noch ein Querschnitt durch einen fertigen holografischen Projektionsschirm für den beispielhaften Fall dargestellt, daß drei Aufnahmeschichten für die drei Farben rot (101), grün (102) und blau (103) verwendet wurden. Der holografische Schirm ist vorzugsweise ein Sandwich aus einer transparenten Trägerschicht (104), z.B. aus Glas oder Acrylglas, die mit einer Vergütung (Entspiegelungsschicht) (105) versehen ist, mit den holografischen Schichten (101, 102, 103) und einer, gegebenenfalls durch eine brechzahlangepaßten Klebe - oder Zwischenschicht (106) optisch angekoppelten, lichtabsorbierenden Schicht (107). Es kann jedoch auch eine einzige holografische Schicht vorhanden sein, in der drei Gitterstrukturen für drei Farben niedergelegt sind, oder aber andere Schicht - und Farbkombinationen.

Als Aufnahmematerial für die "dicken" Hologramme kommen vorzugsweise Silberhalogenid - Material, Dichromat - Gelatine oder Photopolymer - Material in Frage. Es sind grundsätzlich alle Materialien geeignet, mit denen winkel - und wellenlängenselektive holografische Gitter mit den Eigenschaften von Volumengittern hergestellt werden können.

Die Herstellung der beugenden holografischen Gitterstrukturen für drei Grundfarben kann grundsätzlich mit drei Lasern in diesen Grundfarben durch gleichzeitige oder aufeinanderfolgende Belichtung in eine oder mehrere Aufzeichnungsschichten erfolgen, wenn die nachfolgende Weiterverarbeitung farbgetreu erfolgt, d.h. die Wiedergabewellenlänge der holografischen Gitter nach erfolgter Verarbeitung gleich der Aufnahmewellenlänge ist. Erfolgt bei der Verarbeitung jedoch eine Schrumpfung oder Schwellung der Schichten, so verschieben sich die Wiedergabewellenlängen. Dies kann, wie dem Fachmann bekannt, auch zur Erzeugung holografischer Gitterstrukturen für unterschiedliche Farben bei Belichtung mit nur einer Laserwellenlänge durch vorheriges oder nachfolgendes Schwellen oder Schrumpfen der Aufzeichnungsschichten ausgenutzt werden.

Der Ort des Referenz - Ausgangspunktes bei der Belichtung des holografischen Projektionsschirms richtet sich nach dem späteren erwünschten Aufstellungsort des Projektors. Für Großprojektionen in Wohnräumen und auch in größeren Räumen wäre die Anbringung des Projektors vorzugsweise an der Decke des Raums vorzusehen und eine Verbindung mit dem Laseremitter vorzugsweise über Lichtleitfasern vorzunehmen.

Projektions - bzw. Scanwinkel können je nach Anwendung unterschiedlich sein, z.B. 30° x 30° oder 45° x 45°. Unterschiedliche Winkel in Azimuth und Elevation können ebenfalls realisiert werden. Diese geometrischen Parameter fließen in die Aufnahmegeometrie ein.

Die Schirmvorlage für die holografischen Aufnahmen braucht nicht plan zu sein. Es können gekrümmte Schirmoberflächen und für spezielle Projektionen beliebig dreidimensional geformte Flächen verwendet werden, wie z.B. die Oberflächen von Litfaßsäulen oder Gipsköpfen.

Durch den Einbau von optischen Zusatzelementen im Strahlengang des Referenz- oder Objektstrahls kann das holografische Bild des Schirms beeinflußt werden, z.B. in der Helligkeitsverteilung der Wiedergabe oder zur gezielten Korrektur von Bildfehlern, die z.B. durch das Scanverfahren auftreten können.

An die Stelle von interferenzoptisch aufgezeichneten Masterhologrammen können auch computergenerierte, bzw. von computergenerieten Hologrammen erzeugte Hologramme treten, in die rechnerisch eine bestimmte Streufunktion niedergelegt worden ist.

Es versteht sich, daß der holografische Schirm im Sinne der Erfindung für eine oder mehrerer Laserlinien verwendet werden kann. Diese Laserlinien müssen nicht zwingend im sichtbaren Spektrum liegen, sondern bei Verwendung von geeigneten Aufnahmemateralien auch im UV- oder IR-Bereich, zur Aufnahme von Bildern mit technischen Sensoren wie Kameras, Photodetektoren oder Photodetektorarrays.

Weiterhin kann der Schirm im Sinne der Erfindung mit anderen schmalbandigen Lichtquellen verwendet werden, wie Lampen mit monochromatischer Linienemission und schmalbandigen Leuchtdioden.

## Patentansprüche

1. Verfahren zur Herstellung eines holografischen Bildschirms zur Aufprojektion mit schmalbandigem Licht mit ein oder mehreren Wellenlängen, der selektiv eine einfallende, spektral schmalbandige Lichtstrahlung in einen vorherbestimmten Raumwinkel zurückstreut und gleichzeitig störendes, spektral breitbandiges Umgebungslicht stark absorbiert, und der mindestens ein holografisches Volumengitter aufweist, das an einen Lichtabsorber gekoppelt ist, **dadurch gekennzeichnet, dass** ein holografisches Aufnahmematerial (12; 22) direkt mit schmalbandigem Licht (13) belichtet wird, während sich ein reflektierender Bildschirm (11; 21) in direktem Kontakt zum holografischen Aufnahmematerial (12; 22) befindet, wobei das direkte Licht (13) einen Referenzstrahl in Form eines aufgeweiteten Strahlenbündels bildet, das von einem Ort ausgeht wie der spätere Projektionsstrahl, und vom Bildschirm (11; 13) zurückgestreutes Licht (14) das Objektlicht bildet.

2. Verfahren zur Herstellung eines holografischen Bildschirms zur Aufprojektion mit schmalbandigem Licht mit ein oder mehreren Wellenlängen, der selektiv eine einfallende, spektral schmalbandige Lichtstrahlung in einen vorherbestimmten Raumwinkel zurückstreut und gleichzeitig störendes, spektral breitbandiges Umgebungslicht stark absorbiert, und der mindestens ein holografisches Volumengitter aufweist, das an einen Lichtabsorber gekoppelt ist, **dadurch gekennzeichnet, dass** in einem zweistufigen Verfahren zunächst ein Masterhologramm (72; 82) eines Bildschirms (31; 41) aufgenommen wird und anschließend mit dem Masterhologramm (72; 82) ein reelles Bild (71; 81) des Bildschirms (31; 41) erzeugt wird, an dessen Ort ein holografisches Aufnahmematerial (76; 86) platziert wird, um mittels eines Referenzstrahls (77; 87) das Bild (71; 81) des Bildschirms (31; 41) aufzunehmen,
wobei als Referenzstrahl (77; 87) ein aufgeweitetes Strahlenbündel dient, das von einem Ort ausgeht wie der spätere Projektionsstrahl.

3. Verfahren nach Anspruch 1 oder 2, **dadurch gekennzeichnet, dass** in mindestens einem der Aufnahmeschritte durch optische Zusatzelemente im Strahlengang Helligkeitsverteilung und Bildfehler korrigiert werden.

4. Verfahren nach einem der Ansprüche 1 bis 3, **dadurch gekennzeichnet, dass** durch Mehrstrahlbeleuchtung des Bildschirms (11; 21; 31; 41) die Gesamtstreulichtverteilung des holografischen Bildschirms eingestellt wird.

5. Verfahren nach Anspruch 2, **dadurch gekennzeichnet, dass** als Masterhologramm (72; 82) ein computergeneriertes Hologramm oder ein interferometrisch aufgezeichnetes Hologramm verwendet wird.

6. Verfahren nach einem der vorhergehenden Ansprüche, **dadurch gekennzeichnet, dass** anschließend der holografische Bildschirm als Kopiermaster (91) verwendet wird, wobei unbelichtetes Aufnahmematerial (96) in unmittelbaren Kontakt zur holografischen Schicht (92) des Kopiermasters (91) gebracht wird und die Gitterstruktur des Kopiermasters (91) in das Aufnahmematerial (96) gebracht wird.

7. Verfahren nach einem der vorhergehenden Ansprüche, **dadurch gekennzeichnet, dass** als Lichtquellen bei der Herstellung des holografischen Bildschirms Laserquellen oder schmalbandige Leuchtdioden verwendet werden.

8. Verfahren nach einem der vorhergehenden Ansprüche, **dadurch gekennzeichnet, dass** drei Aufnahmeschichten (101, 102, 103) für die Farben rot, grün, blau verwendet werden.

9. Verfahren nach einem der vorhergehenden Ansprüche, **dadurch gekennzeichnet, dass** drei Gitterstrukturen für drei Farben erzeugt werden.

## Claims

1. Method for producing a holographic screen for front projection with narrow-band light with one or more wavelengths, which selectively scatters back an incoming, spectrally narrow-band radiation of light into a predetermined solid angle and at the same time highly absorbs troublesome spectrally broadband ambient light, and which has at least one holographic volume grating which is coupled to a light absorber, **characterised in that** a holographic photographic material (12; 22) is exposed directly with narrow-band light (13), whilst a reflecting screen (11; 21) is positioned in direct contact with the holographic photographic material (12; 22),
wherein the direct light (13) forms a reference beam in the form of an expanded bundle of rays which emanate from one point as the subsequent projection beam and light scattered back (14) from the screen (11; 13) forms the object light.

2. Method for producing a holographic screen for front projection with narrow-band light with one or more wavelengths, which selectively scatters back an incoming, spectrally narrow-band radiation of light into a predetermined solid angle and at the same time highly absorbs troublesome spectrally broadband ambient light, and which has at least one holographic volume grating which is coupled to a light absorber, **characterised in that** in a two-stage process first of all a master hologram (72; 82) of a screen (31; 41) is recorded and subsequently a real image (71; 81) of the screen (31; 41) is produced with the master hologram (72; 82), at the location of which image a holographic photographic material (76; 86) is placed in order to record the image (71; 81) of the screen by means of a reference beam (77; 87),
wherein an expanded bundle of rays serves as the reference beam (77; 87) which emanates from one point as the subsequent projection beam.

3. Method according to Claims 1 or 2, **characterised in that** in at least one of the photographing steps, brightness distribution and image defects are corrected by additional optical elements in the path of the beam.

4. Method according to one of Claims 1 to 3, **characterised in that** the total stray light composition of the holographic screen is set by multi-ray illumination of the screen (11; 21; 31; 41).

5. Method according to Claim 2, **characterised in that** a computer generated hologram or a hologram recorded by an interferometer is used as the master hologram (72; 82).

6. Method according to one of the preceding Claims, **characterised in that** the holographic screen is subsequently used as a copying master (91), unexposed photographic material (96) being brought into direct contact with the holographic coating (92) of the copying master (91) and the grating structure of the printing master (91) being transferred into the photographic material (96).

7. Method according to one of the preceding Claims, **characterised in that** laser sources or narrow-band photodiodes are used as light sources in the production of the holographic screen.

8. Method according to one of the preceding Claims, **characterised in that** three photographic coatings (101; 102; 103) are used for the colours red, green and blue.

9. Method according to one of the preceding Claims, **characterised in that** three grating structures are produced for three colours.

## Revendications

1. Procédé de fabrication d'un écran image holographique pour la projection frontale avec une lumière à bande étroite, à une ou plusieurs longueurs d'ondes, qui diffuse sélectivement un rayonnement lumineux incident, à bande spectrale étroite dans un angle solide prédéfini et absorbe fortement en même temps la lumière ambiante à bande spectrale large, perturbatrice, et comporte au moins un réseau holographique en volume couplé à un absorbeur de lumière,
**caractérisé en ce qu'**
on éclaire une matière de support holographique (12, 22) directement avec la lumière à bande étroite (13) pendant qu'un écran image de réflexion (11, 21) est en contact direct avec la matière de support holographique (12, 22), la lumière directe (13) formant un faisceau de référence en forme de faisceau de rayon élargi partant d'un endroit d'où partira la future projection, et la lumière (14) diffusée par l'écran image (11, 13) forme la lumière objet.

2. Procédé de réalisation d'un écran image holographique pour la projection avec une lumière à bande étroite à une ou plusieurs longueurs d'ondes qui réfracte sélectivement un rayonnement lumineux incident à spectre à bande étroite dans un angle solide prédéterminé et absorbe fortement en même temps la lumière ambiante à bande spectrale large, perturbatrice, et ayant au moins un réseau holographique en volume couplé à un absorbeur de lumière,
**caractérisé en ce que**
dans un procédé à deux étapes on prend tout d'abord un hologramme maître (72, 82) d'un écran image (31, 41) et ensuite avec l'hologramme maître (72, 82) on forme une image réelle (71, 81) de l'écran image (31, 41) et à son emplacement on place un support d'enregistrement holographique (76, 86) pour prendre l'image (71, 81) de l'écran image (31, 41) par un faisceau de référence (77, 87),
le faisceau de référence (77, 87) étant un faisceau de rayon étalé partant d'un endroit d'où sera issue la projection ultérieure.

3. Procédé selon la revendication 1 ou 2,
**caractérisé en ce que**
dans au moins une étape de prise de vue on corrige la répartition de la luminosité et les défauts de l'image avec des éléments optiques supplémentaires placés dans le chemin des rayons.

4. Procédé selon l'une des revendications 1 à 3,
**caractérisé en ce qu'**
on règle la distribution globale de la diffusion de l'écran image holographique par un éclairage par plusieurs faisceaux de l'écran image (11, 21, 31, 41).

5. Procédé selon la revendication 2,
**caractérisé en ce que**
comme hologramme maître (72, 82) on utilise un hologramme généré par un ordinateur ou hologramme d'enregistrement interferrométrique.

6. Procédé selon l'une des revendications précédentes,
**caractérisé en ce qu'**
on utilise ensuite l'écran image holographique comme maître (91) à copier, le support d'enregistrement non exposé (96) étant mis en contact direct avec la couche holographique (92) du maître à copier (91) et on place la structure du réseau du maître à copier (91) dans le support d'enregistrement (96).

7. Procédé selon l'une des revendications précédentes,
**caractérisé en ce que**
les sources lumineuses utilisées pour la fabrication de l'écran image holographique sont des sources laser ou des diodes électroluminescentes à bande étroite.

8. Procédé selon l'une des revendications précédentes,
**caractérisé en ce qu'**
on utilise trois couches de prises de vue (101, 102, 103) pour les couleurs rouge, vert, bleue.

9. Procédé selon l'une des revendications précédentes,
**caractérisé en ce qu'**
on génère trois structures de réseaux pour trois couleurs.
